# DEMANDE DE BREVET EUROPEEN

(11) **EP 3 450 616 A1**
(43) Date de publication de la demande: **06.03.2019**
(21) Numéro de dépôt: 17188726.8
(22) Date de dépôt: 31.08.2017
(51) Int. Cl.: D06F 75/12

(54) **SYSTEME DE REPASSAGE COMPRENANT UNE TRANSMISSION BIDIRECTIONNELLE DE DONNEES ENTRE LA BASE ET LE FER**

(71) Demandeur: Laurastar S.A., 1618 Châtel-St-Denis (CH)
(72) Inventeur: MONNERAT, Christophe, 1773 Russy (CH); DECASTEL, Sylvain, 1671 Remaufens (CH); SEYDOUX, Laurent, 1673 Gillarens (CH)
(74) Mandataire: Grosfillier, Philippe

(57) **Abrégé**

Système de repassage comprenant un fer et une base reliés par une ligne électrique pour l'alimentation d'une carte disposée dans le fer; caractérisé par le fait qu'il comprend un circuit imprimé (PCB) adapté pour moduler la tension dans la ligne électrique, de manière à assurer une transmission bidirectionnelle de données entre la base et le fer.

## Description

### Domaine de l'invention

L'invention concerne les systèmes de repassage constitués d'au moins un fer et une base reliés par une ligne électrique qui alimente une carte disposée dans le fer.

### Etat de la technique

Dans la plupart des systèmes existants, la liaison entre la base et le fer comprend une première ligne électrique pour la transmission en haute tension (HT) de la puissance de chauffage et une deuxième ligne électrique pour l'alimentation en basse tension (BT) d'une carte qui est disposée dans la poignée du fer. Lorsque la base comprend un générateur de vapeur, la liaison entre la base et le fer comprend en outre un tube flexible pour le transfert de la vapeur.

Dans certains systèmes de l'état de la technique, l'utilisateur peut modifier quelques paramètres de fonctionnement du générateur, comme p.ex. la pression. Toutefois, ces paramètres sont modifiés en agissant directement sur le générateur, par activation de boutons ou potentiomètres disposés sur celui-ci.

Pendant ce type d'opération, l'utilisateur doit déposer le fer ou tenir le fer dans une main et modifier les paramètres du générateur avec l'autre main. Dans tous les cas, ce genre de manipulation n'est pas aisée, voire dangereuse.

### Description de l'invention

La présente invention offre la possibilité de faciliter et sécuriser la modification des paramètres de fonctionnement de la base.

A cet effet, elle concerne un système de repassage et une utilisation telles que définies dans les revendications, qui permet de modifier des paramètres de fonctionnement de la base, p.ex. du générateur de vapeur, en agissant uniquement sur le fer.

L'invention se rapporte donc à un système de repassage comprenant un fer et une base reliés par une ligne électrique pour l'alimentation d'une carte disposée dans le fer. Le système se caractérise par le fait qu'il comprend un circuit imprimé (PCB) adapté pour moduler la tension dans la ligne électrique, de manière à assurer une transmission bidirectionnelle de données entre la base et le fer.

La modulation de la tension permet d'obtenir une transmission numérique de données, soit une succession de bits qui sont p.ex. générés de la manière suivante : 12V = 1, 0V = 0.

Selon une variante de l'invention, la base comprend un générateur de vapeur.

L'invention concerne également une utilisation d'un système de repassage tel que défini précédemment et caractérisée par le fait que l'on transmet des données de la base vers le fer et vice-versa, par le biais d'une modulation de la tension.

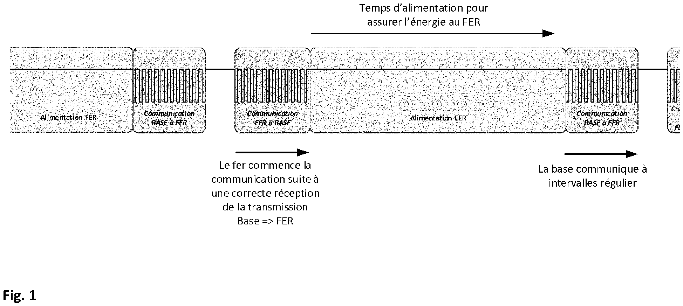

L'invention permet d'alimenter l'électronique du fer sans nécessiter au sein de celui-ci la transformation d'une haute tension (p.ex. 220V AC) en basse tension (p.ex. 12V ou 5V DC) . Dans le cadre de la présente invention, cette transformation est réalisée dans la base, au moyen du PCB et d'un limiteur de courant. Pour transmettre des données, la base envoie une information en modulant la tension comme indiqué précédemment. Le fer « répond » ensuite et donne des ordres à la base (voir figure 1). Lors de cette phase de réponse, la tension d'alimentation de la carte du fer est modulée par le fer. Par exemple pour induire un état 0, le fer coupe sa ligne d'alimentation, et pour induire un état « 1 », il maintient la basse tension (p.ex. 12V ou 5V).

Afin que l'électronique du fer puisse continuer à être alimentée et fonctionner pendant la phase de réponse, le fer comprend une source électrique indépendante de la base, comme p.ex. une petite batterie et un condensateur.

Une séquence telle qu'illustrée sur la figure 1 se déroule comme suit :
1- Alimentation continue sans communication pendant un temps défini.
2- Initiation de la communication par la base
3- Une fois la communication correctement reçue, le fer répond directement.
4- Relance d'un nouveau cycle à partir de l'étape 1 décrit précédemment.

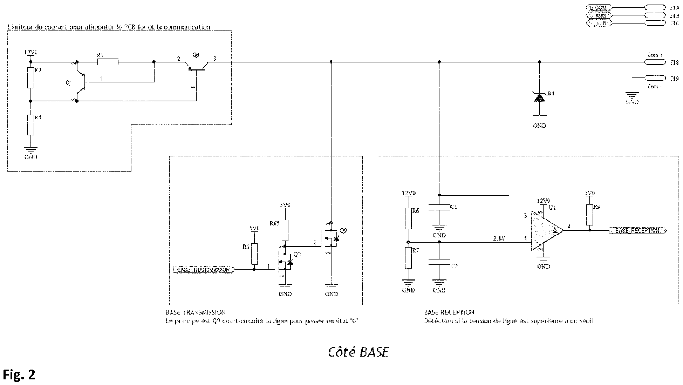

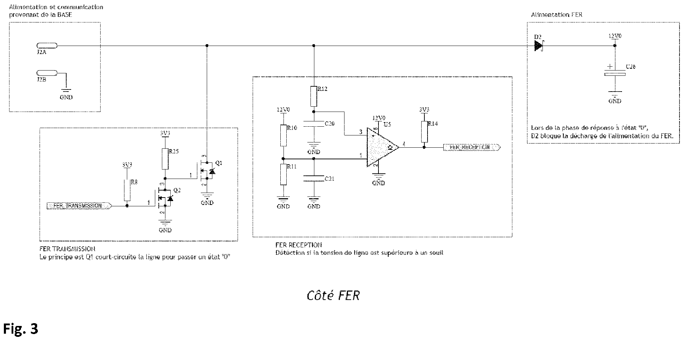

Les figures 2 et 3 illustrent des exemples de circuits électroniques permettant de moduler la tension. La figure 2 illustre le circuit de la base et la figure 3 celui du fer.

Au niveau de la base (figure 2), le limiteur de courant alimente en permanence la ligne qui alimente le fer.

Ce limiteur est actif pendant la communication, uniquement pour transmettre un état « 0 », car comme indiqué précédemment, un tel état est obtenu par coupure de cette ligne.

Pour transmettre un état, le fonctionnement est identique dans le fer ou la base.
Transmission d'un état « 0 » = court-circuit (donc 0V)
Transmission d'un état « 1 » = Q1 ou Q9 ouvert (p.ex. 5V ou 12V).

Pour la réception, le fonctionnement est identique dans le fer ou la base.
Un comparateur détecte si le niveau sur la ligne est « haut » (= « 1 ») ou « bas » (« 0 »).

Dans le fer, la partie « Alimentation FER » assure que lors de la communication, la capacité C26 ne se décharge pas par le court-circuit de ligne.

La courant HT de chauffage peut être contrôlé par la base ou par le fer.

En résumé, dans l'invention le générateur de vapeur, et plus généralement la base, peut être pilotée en agissant uniquement sur le fer, p.ex. sur la poignée.

Il va sans dire que l'invention ne se limite pas aux cas de figure précités.

## Revendications

1. Système de repassage comprenant un fer et une base reliés par une ligne électrique pour l'alimentation d'une carte disposée dans le fer ; **caractérisé par le fait qu'**il comprend un circuit imprimé (PCB) adapté pour moduler la tension dans la ligne électrique, de manière à assurer une transmission bidirectionnelle de données entre la base et le fer.

2. Système selon la revendication 1 ou 2 dans lequel la base comprend un générateur de vapeur.

3. Système selon la revendication 1 ou 2 dans lequel le fer comprend une source électrique indépendante de la base.

4. Système selon l'une quelconque des revendications précédentes dans lequel le fer comprend au moins un actionneur activable manuellement pour contrôler le fonctionnement de la base.

5. Utilisation d'un système de repassage tel que défini dans l'une quelconque des revendications précédentes **caractérisée par le fait que** l'on transmet des données de la base vers le fer et vice-versa.

6. Utilisation selon la revendication précédente dans laquelle la pression du générateur est régulée depuis le fer.

7. Utilisation selon la revendication 5 ou 6 dans laquelle la puissance de chauffage du fer est régulée depuis le fer.
